# NEW EUROPEAN PATENT SPECIFICATION

(11) **EP 0 444 067 B2**
(45) Date of publication and mention of the opposition decision: **24.01.2001**
(45) Mention of the grant of the patent: 30.03.1994
(21) Application number: 89912477.0
(22) Date of filing: 10.11.1989
(51) Int. Cl.: H04Q 7/20, H04B 7/26, H04M 1/72

(54) **COMMUNICATIONS SYSTEM**
KOMMUNIKATIONSSYSTEM
SYSTEME DE COMMUNICATION

(30) Priority: 11.11.1988 GB 8826476
(43) Date of publication of application: 04.09.1991
(73) Proprietor: BRITISH TELECOMMUNICATIONS public limited company, London EC1A 7AJ (GB)
(72) Inventor: MOTLEY, Andrew, James, Woodbridge Suffolk IP12 4SF (GB); CHADNEY, Anthony, Gerard, Suffolk IP4 2ET (GB)
(74) Representative: Lidbetter, Timothy Guy Edwin
(86) International application number: GB8901341
(87) International publication number: WO9005432

(56) References cited:
- EP-A- 0 156 336
- EP-A- 0 233 963
- DE-A- 3 135 231
- GB-A- 2 138 652
- Proceedings of the IEEE, vol. 75, no. 4, April 1987, IEEE (New York, US); D.C. Cox: "Universal digital portable radio communications", pages 436-477
- Patent Abstracts of Japan, vol. 5, no. 15, (E-43)(687), 29 January 1981 & JP, A, 55143854

## Description

The present invention relates to a communications system, and in particular to a system for interconnecting mobile radio (RF) units to a fixed network or system e.g. PSN, ISDN, LAN or PBX. A known type of system has a base centre, having one or more radio transceivers for providing a number of radio frequency (RF) communications links; and a plurality of fixed radio ports through which RF signals can be transmitted and received over the air.

At present, for example, in a cellular radio system mobile radio (RF) units communicate with fixed base stations which have radio transceivers that are connected to a switching control centre or base centre which is in turn coupled to the PSTN. In the proposed Telepoint system, cordless telephones (CTs) will be able to access the PSTN via radio communication with fixed base stations equipped with radio transceivers which are directly connected to the PSTN.

In both these examples radio transceivers and base stations proliferate in the connection between the mobile user and the PSTN, or other network. These systems are therefore complicated and expensive.

An example of such a system is disclosed in UK Patent Application No. GB2138652 which discloses a number of cordless substations each of which has a radio transceiver and each of which substations communicates with the other substations and a nodal station connected to the PSTN by optical fibre links or other means. In this system each substation incorporates radio transceivers.

Future systems will need to provide improved coverage including the provision of many small radio "cells", and hence many base stations and radio transceivers will be required. Difficulties in finding appropriate base station sites and the costs of equipping them may make such conventional developments impracticable; certainly they reduce the commercial attractiveness of such projects. The present invention seeks to provide a communication system of simplified structure and improved performance.

Japanese Patent Specification 55-143854 discloses a communications system comprising a base centre having a radio transceiver for providing a radio frequency (RF) communications link, a plurality of fixed radio ports through which RF signals can be transmitted and received over the air, a fibre optic network for interconnecting the RF transceivers in the base centre with the fixed radio ports; a plurality of RF/optical interfaces by which the RF signals can be modulated onto and demodulated from one or more optical carriers, whereby the RF signals may be carried on the fibre optic network by means of modulated optical carriers.

According to the present invention, there is provided a communications system comprising:
a base centre having one or more radio transceivers for providing a number of radio frequency (RF) communications links, each communications link being on a seperate radio frequency,
a plurality of fixed radio ports through which RF signals can be transmitted and received over the air,
a fibre optic network for interconnecting the RF transceivers in the base centre with the fixed radio ports;
a matrix switch, for switching the RF signals to selectively interconnect the transceivers and the radio ports through the fibre optic network, the matrix switch being arranged to selectively multiplex any number of the RF signals into a frequency division multiplex to be carried on one of the optical carriers;
a plurality of RF/optical interfaces by which the RF signals can be modulated onto and demodulated from one or more optical carriers, which interfaces are between the RF matrix switch and the fibre optic network, and between the fibre optic network and the fixed radio ports, whereby the RF signals may be carried on the fibre optic network by means of modulated optical carriers; and having either or both of the following characterising features:
   - the base station is adapted for controlling call handover between radio ports through selective switching of individual radio transceivers, from one radio port to another radio port by the matrix switch;
   - diversity operation is provided by switching said links to two or more radio ports in the matrix switch.

The present invention makes use of the centralisation of transceivers into base centres, with its consequent advantages in terms of technical and commercial gain, by having the transceivers selectively connectable through the fibre optic network to the RF ports. The optical signals may be multiplexed/demultiplexed in the fibre optic network. The fibre optic network may also incorporate wavelength routing of optical signals. The RF Communication linking may for example, be time division multiplexed (TDM) or frequency division multiplexed (FDM).

A preferred embodiment of the invention will now be described by way of example, and with reference to the accompanying drawings, wherein:
- Figure 1 is a schematic block diagram of a communications system according to a preferred embodiment of the invention;
- Figure 2a is a schematic block diagram of an optical matrix switch which can form part of the preferred embodiment;
- Figure 2b is a schematic block diagram of an RF matrix switch which can form part of the preferred embodiment; and
- Figure 3 is a schematic view of another embodiment of the invention.

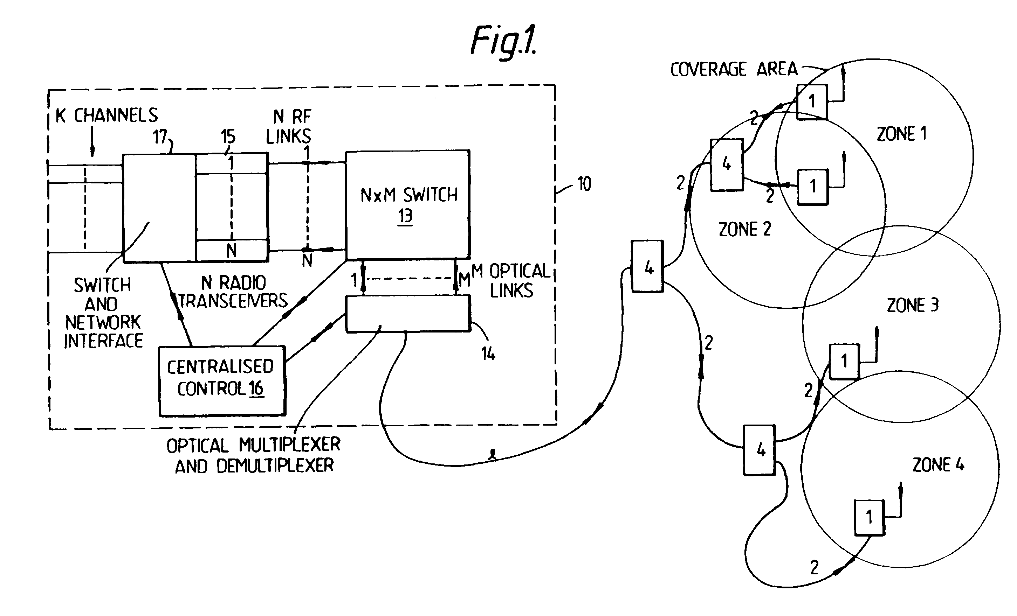

The preferred embodiment illustrated in Figure 1 is a multi-user, area coverage radio distribution system using an optical network 2,4 to link the fixed radio distribution ports 1 to a centralised radio and other signal processing base centre 10. An important feature of the system is the use of an optical carrier modulated, e.g. amplitude modulated, with a radio frequency (RF) signal.

In bath the base centre 10 and RF ports 1 there are, arranged in different ways, radio/optical interfaces which can place an RF signal onto an optical carrier or conversely recover an RF signal from an optical carrier. The modulation of the optical carrier may be achieved by driving a suitable laser device with the input RF signal so that output of the laser is effectively intensity or amplitude modulated by the RF signal. With this method, a suitable optical detector receiving the amplitude modulated optical signal can produce a direct RF output. In the present specification, the term radio/optical interface is used in this context.

The radio ports 1 each have a radio/optical interface which receives and transmits radio carriers from and to roaming radio equipment. The radio carriers to be sent/received from the centralised location are placed onto/taken off an optical carrier, e.g. as described above. The optical network 2,4 linking the radio ports 1 to the base centre 10 is generally conventional, having optical links carrying RF carrier/carriers on optical carrier/carriers. Each optical link is shown as bidirectional. However, separate links could be provided for each direction. Within the optical system are optical multiplexers/demultiplexers (M + D) 4. Each multiplexer concentrates a number of optical carriers, say X, onto a fewer number of optical links than X. The demultiplexer splits a number of optical carriers onto individual optical links.

At the base centre 10 the optical system 2,4 is connected to an optical multiplexer and demultiplexer (M + D) 14. The M+D 14 is connected (illustratively) by M optical lines to an NxM matrix switch 13, which will be described below in more detail. The NxM matrix switch 13 has N RF links to a number (N) radio transceivers 15. The radio transceivers 15 are connected through a switch 17 to a number (K) channels of another network which may be ISDN, cellular, LAN, PBX etc. K may be greater than or equal to N. Also in the base centre 10, a central unit 16 is connected to the switch 17, NxM matrix switch, and M+D 14 to control optical, RF, and baseband routing and switching, and coordinate the allocation of RF carriers and channels in conjunction with mobile equipment.

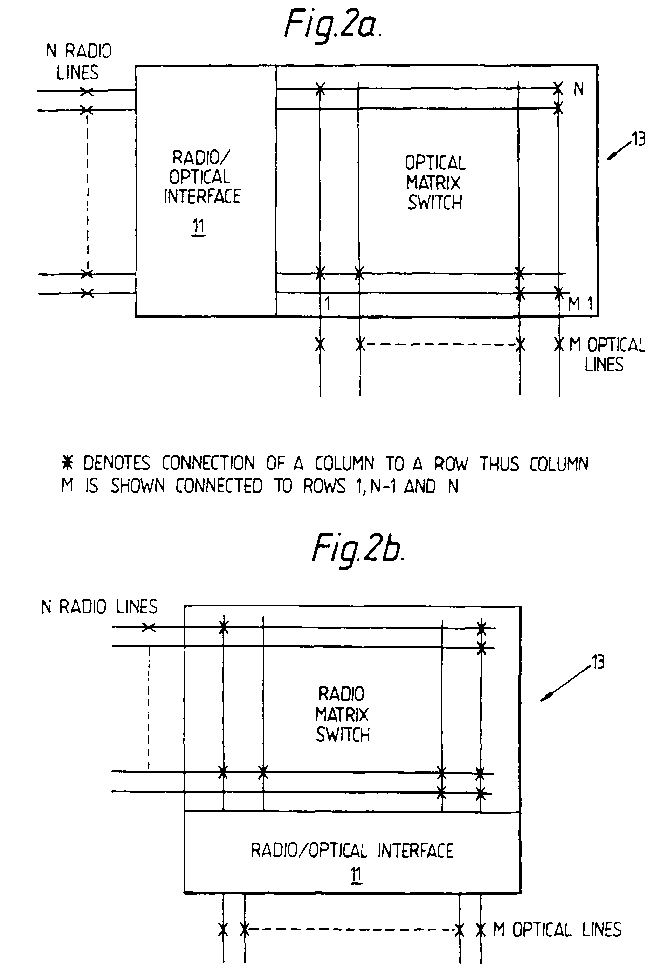

A central part of the base centre 10 is the NxM matrix switch 13. This multiplexes any of the N radio carriers onto any of the M optical transmission lines, i.e. none, one or more of the radio carriers may be on any one of the optical carriers at any one time. The NxM matrix switch 13 may be configured in one of two ways, as shown in Figures 2a and 2b. In each case, the radio/optical interface places the RF carriers to be transmitted from the central transceivers onto the optical carrier(s) and takes off, from the optical carrier(s), the RF carriers to be received by the central transceivers. The switching may be optical (Figure 2a), in which case the radio/optical interface is on the radio "side" of the switch, or the switch may be a radio (RF) matrix switch (Figure 2b), in which case the radio optical interface is on the optical system "side" of the switch. In either case, the overall result is that the N radio lines can be multiplexed onto the M optical lines.

The advantages of the system of the preferred embodiment are profound. A user can access the external network through any of the radio ports 1 with a suitable RF transceiver, e.g. a cordless telephone (CT), and be connected to a free one of the N transceivers 15. Provided the RF capacity was available, all N transceivers could be employed in calls to/from a particular one of the radio ports 1, or as would be more likely, the usage of the transceivers would be distributed among the radio ports of the system. Here lies a key advantage of the system: the centralisation of the radio transceivers. In the present system the radio transceivers are centralised, allowing more economic use and facilitating maintenance etc. Other significant advantages include the possibility of handover between ports covering different zones or areas, by simply switching between optical carriers, i.e. by switching within the NxM matrix switch 13. Also the use of diversity can easily be achieved centrally through switching or combining links to 2 or more ports, to improve performance of mobiles covered by those ports. Further, advantageous use of the RF system can be achieved because any of the carriers allocated to the service, rather than a given subset, can be dynamically assigned by the centralised base, to a given zone or cell. Thus an RF carrier may be allocated to both zone 1 and zone 4, but to different users. At another time, RF carrier may be assigned to just zone 3. The total number of users may remain more or less constant for the whole system, but user density within the system may vary. For example, all the users may shift from zone 1 down to zone 4, with all the central transceivers continually active. If transceivers were placed remotely in each of the zones, the same number of transceivers as that at a centrallocation would be required in each of the zones to meet the peak traffic demand during the day, even though they could remain idle for much of the time. Four times the number of transceivers of the centralised configuration would then be required for the system of Figure 1, hence the improved trunking performance of the centralised scheme, minimising the cost of providing transceivers, the quantity of equipment in the field and affording a potential reduction in maintenance and installation costs.

Handover requires a change of base transceiver as a mobile transits zones. This need no longer be necessary as the switch, block 3, simply switches the active transceiver for a given mobile from one zone to another as the mobile makes the transition. Thus handover break is reduced to a potentially very short optical or RF switch time compared to the much longer period required to switch between transceivers.

The spectrum efficiency of many radio distribution systems are increased if the RF transmissions within the system are synchronised. This is difficult if transceivers are spread over several locations, but more straightforward when they are centralised.

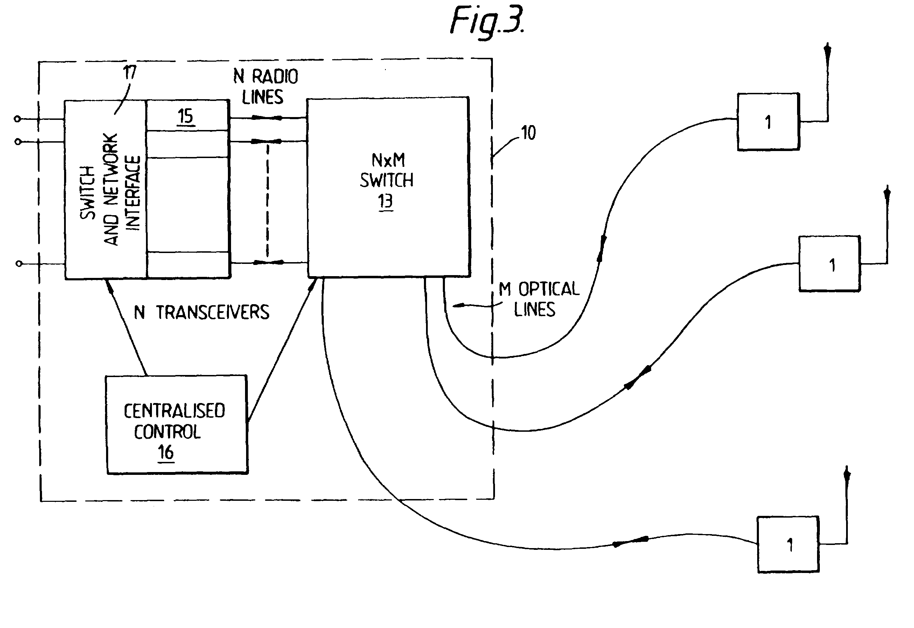

An alternative embodiment of the invention is shown in Figure 3 and is very similar to that of Figure 1, except that the optical system does not incorporate multiplexing/demultiplexing. Thus there are no M + Ds 4 and the M outputs of NxM switch 13 are connected directly to the radio ports 1. There is therefore a permanent 1 to 1 correspondence between the optical lines in the NxM switch 13 and the radio ports 1.

The embodiment of the invention described is based on the use of frequency division multiple access, where each communications link is on a separate radio frequency. As an alternative, time division multiple access could be used, where each communication link exists on separate time slots on a single radio channel. In this case there may still be multiple transceivers in the base centre 10 to cope with the traffic demand and hence provide frequency/timeslot reuse at the radio distribution ports 1. The connection from the transceivers 15 to the matrix switch 13 will then be by N radio links with P timeslots each, making NxP links in total to the matrix switch 13 from the transceivers 15. An extension of this approach is the possibility of a hybrid time and frequency division access system, with multiple radio carriers and several timeslots on each.

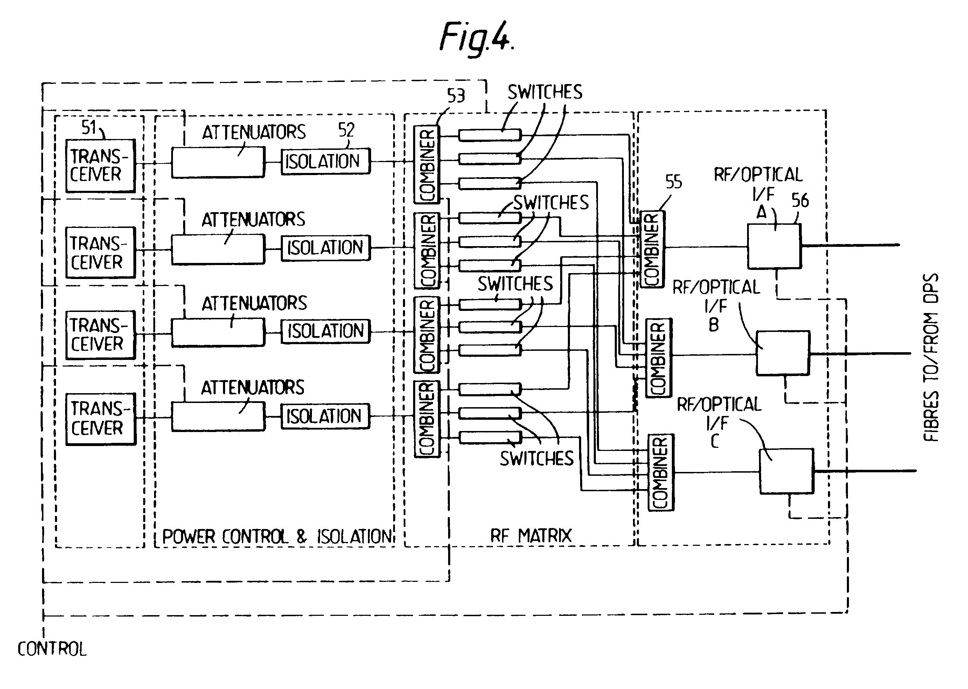

An example of a form of an RF switch is shown in Figure 4. The figure shows the RF matrix switch in a three distribution point system demonstrator. The RF matrix swatch interconnects the four radio transceivers 51 (with their associated isolator circuits 52) to the three circuits each of which feeds a distribution point via a pair of fibres. Bi-directional RF connections for all the combinations of base unit and D.P. are made via switches that allow either through connection or isolation of the connection path. These switches are under computer control.

The signals from/to the radio transceiver 51 are split/combined in four 3 way combiners 53 (these are acutally 4 way combiners with the spare output feeding to the scanning receiver 52) with each output/input passing through a switch that can isolate that output/input. From the switches the signals go to the inputs of one of the three 4 way combiners 55 and hence to/from the D.P.s via one of the three RF/optical interfaces 56.

These switches are under microprocessor control and allow the RF matrix to switch any transceiver to any combination of the distribution points and conversely a distribution point to any combination of the transceivers. Thus a base unit can feed all the distribution points simultaneously then by changing the switches feed only one distribution point.

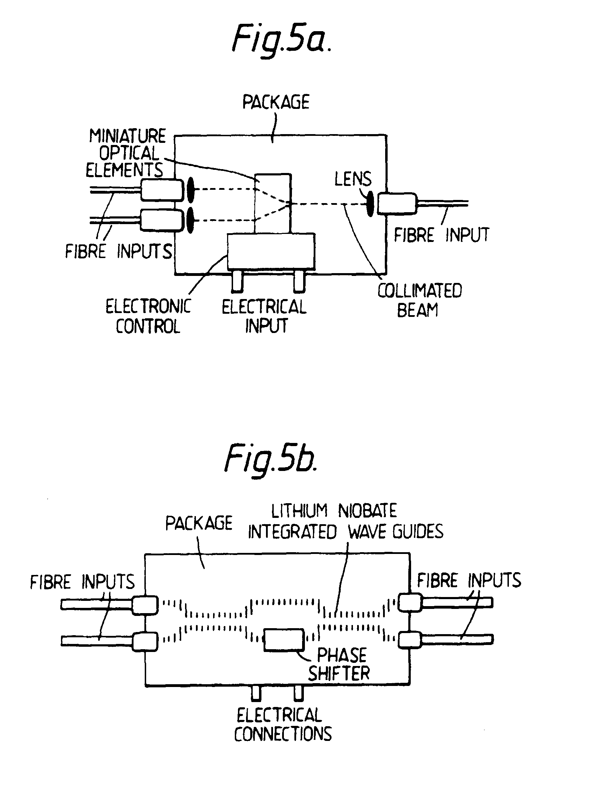

Two examples of the elements for optical switch and shown in Figure 5. There are two basic technologies; (i) Bulk Optic Devices and (ii) Guided Wave Devices.

A bulk optic switch element, shown in Figure 5-(a), uses mechanical or physical reorientation of the optical path to achieve the switching of the incoming optical signals between output ports. An example of this type of switch is presented below for a single input switchable between two outputs. Other switch configurations using this as a basic building block facilitate 2x2 and 2x4 switches.

A guided wave device switch element, shown in Figure 5(b), uses the electro-optic effect to change the optical propagation characteristics of switch waveguides through the application of electric fields. An example of this device type is the Mach Zender Interferometer (MZI) shown in Figure 5(b). This type of switch can be extended from a simple 2x2 to a non-blocking 8x8 switch matrix.

## Claims

1. A communications system comprising
a base centre (10) having one or more radio transceivers (15) for providing a number of radio frequency (RF) communications links, each communications link being on a seperate radio frequency,
a plurality of fixed radio ports (1) through which RF signals can be transmitted and received over the air,
a fibre optic network (2,4) for interconnecting the RF transceivers in the base centre with the fixed radio ports;
a matrix switch (13), for switching the RF signals to selectively interconnect the transceivers (15) and the radio ports (1) through the fibre optic network (2,4), the matrix switch being arranged to selectively multiplex any number of the RF signals into a frequency division multiplex to be carryied on one of the optical carriers;
a plurality of RF/optical interfaces (11) by which the RF signals can be modulated onto and demodulated from one or more optical carriers, which interfaces (11) are between the RF matrix switch (13) and the fibre optic network (2,4), and between the fibre optic network (2,4) and the fixed radio ports, whereby the RF signals may be carried on the fibre optic network (2,4) by means of modulated optical carriers;
characterised in that the base station is adapted for controlling call handover between radio ports through selective switching of individual radio transceivers (15), from one radio port (1) to another radio port (1) by the matrix switch.

2. A communications system as claimed in claim 1 in which diversity operation is provided by switching said links to two or more radio ports in the matrix switching.

3. A communications system comprising
a base centre (10) having one or more radio transceivers (15) for providing a number of radio frequency (RF) communications links, each communications link being on a seperate radio frequency,
a plurality of fixed radio ports (1) through which RF signals can be transmitted and received over the air,
a fibre optic network (2,4) for interconnecting the RF transceivers in the base centre with the fixed radio ports;
a matrix switch (13), for switching the RF signals to selectively interconnect the transceivers (15) and the radio ports (1) through the fibre optic network (2,4), the matrix switch being arranged to selectively multiplex any number of the RF signals into a frequency division multiplex to be carried on one of the optical carriers;
a plurality of RF/optical interfaces (11) by which the RF signals can be modulated onto and demodulated from one or more optical carriers, which interfaces (11) are between the RF matrix switch (13) and the fibre optic network (2,4), and between the fibre optic network (2,4) and the fixed radio ports, whereby the RF signals may be carried on the fibre optic network (2,4) by means of modulated optical carriers;
characterised in that diversity operation is provided by switching said links to two or more radio ports in the matrix switch.

4. A communications system according to claim 1, 2 or 3 wherein there is multiplexing/demultiplexing of the optical signals in the fibre optic network.

5. A communication system as claimed in claims 1, 2, 3 or 4 wherein the fibre optic network (2,4) incorporates wavelength routing of optical signals.

## Patentansprüche

1. Kommunikationssystem, das aufweist: eine Basiszentrale mit einem oder mehreren Funktransceivern (15) zur Bereitstellung einer Anzahl von über Funkfrequenz (RF) betriebenen Kommunikationsstrecken, wobei jede Kommunikationsstrecke eine separate Funkfrequenz belegt; und eine Vielzahl von feststehenden Funkports (1), durch die RF-Signale durch die Luft übertragen und empfangen werden können, ein Lichtleitfasernetz (2, 4) zum Zusammenschalten der RF-Transceiver (15) in der Basiszentrale und der feststehenden Funkports, einen Matrixschalter (13) für das Schalten der Funksignale zum selektiven Zusammenschalten der Transceiver (15) und Funkports (1) über das Lichtleitfasernetz (2, 4), wobei der Matrixschalter dazu eingerichtet ist, eine beliebige Anzahl von Funksignalen selektiv auf einen der optischen Träger zu frequenzmultiplexen, eine Vielzahl von Funk-/ optischen Schnittstellen vorhanden ist, durch die RF-Signale auf ein oder mehrere optische Signale aufmoduliert, oder von einem oder mehreren optischen Trägern demoduliert werden können, wobei sich die Schnittstellen zwischen den RF-Transceivern und dem Lichtleitfasernetz und zwischen dem Lichleitfasernetz und den feststehenden Radioports befinden, wodurch die RF-Signale auf dem Lichtleitfasernetz durch modulierte optische Träger transportiert werden können,
dadurch gekennzeichnet, dass
die Basiszentrale ausgelegt ist für das Steuern von Anrufweitergabe zwischen Funkports über selektives Schalten der einzelnen Funktransceiver (15) von einem Funkport (1) zu einem anderen Funkport (1) mit dem Matrixschalter.

2. Kommunikationssystem nach Anspruch 1, bei dem eine Diversity-Operation durch Verbinden der Strecken mit zwei oder mehr Funkports in dem Matrixschalter vorgenommen wird.

3. Kommunikationssystem, das aufweist: eine Basiszentrale mit einem oder mehreren Funktransceivern (15) zur Bereitstellung einer Anzahl von über Funkfrequenz (RF) betriebenen Kommunikationsstrecken, wobei jede Kommunikationsstrecke eine separate Funkfrequenz belegt und eine Vielzahl von feststehenden Funkports (1), durch die RF-Signale durch die Luft übertragen und empfangen werden können, ein Lichtleitfasernetz (2, 4) zum Zusammenschalten der RF-Transceiver in der Basiszentrale und der feststehenden Funkports einen Matrixschalter (13) für das Schalten der Funksignale zum selektiven Zusammenschalten der Transceiver (15) und Funkports (1) über das Lichtleitfasernetz (2, 4), wobei der Matrixschalter dazu eingerichtet ist, eine beliebige Anzahl von Funksignalen selektiv auf einen der optischen Träger zu frequenzmultiplexen, eine Vielzahl von Funk-/ optischen Schnittstellen vorhanden ist, durch die RF-Signale auf ein oder mehrere optische Signale aufmoduliert, oder von einem oder mehreren optischen Trägern demoliert werden können, wobei sich die Schnittstellen zwischen den RF-Transceivern und dem Lichtleitfasernetz und zwischen dem Lichtleitfasernetz und den feststehenden Radioports befinden, wodurch die RF-Signale auf dem Lichtleitfasernetz durch modulierte optische Träger transportiert werden können, dadurch gekennzeichnet, dass
die Diversity-Operation durch das Verbinden der Strecken mit zwei oder mehr Funkports in dem Matrixschalter erfolgt.

4. Kommunikationssystem nach Anspruch 1, 2 oder 3, bei dem ein Multiplexieren/Demultiplexieren der optischen Signale im Lichtleitfasernetz stattfindet.

5. Kommunikationssystem nach Anspruch 1, 2, 3 oder 4, bei dem das Lichtleitfasernetz (2, 4) eine Wellenlängenleitweglenkung der optischen Signale umfaßt.

## Revendications

1. Un système de communication comprenant :
un centre de base (10) équipé d'un ou d'une pluralité d'émetteurs-récepteurs radio (15) pour établir une pluralité de liaisons de communications à fréquence radioélectrique (RF) chaque liaison de communication étant sur une fréquence radio séparée ;
une pluralité de ports radio fixes (1) au travers desquels les signaux RF peuvent être transmis et reçus par air ;
un réseau à fibres optiques (2, 4) pour interconnecter les émetteurs-récepteurs RF (15) et les ports radio fixes ;
un commutateur à matrice (13) pour commuter les signaux RF pour interconnecter sélectivement les émetteurs-récepteurs (15) et les ports radio (1) par l'intermédiaire du réseau de fibres optiques (2, 4), le commutateur à matrice étant arrangé pour multiplexer sélectivement des nombres de signaux RF dans un multiplex à répartition en fréquence devant être porté sur un des porteurs optiques,
une pluralité d'interfaces radiooptiques (11) grâce auxquelles les signaux RF peuvent être modulés et démodulés à partir d'un ou d'une pluralité de porteurs optiques, lesdites interfaces (11) étant entre le commutateur à matrice (13) et le réseau à fibres optiques (2, 4), et entre le réseau de fibres optiques (2, 4) et les ports radio fixes de manière que les signaux RF puissent être acheminés sur le réseau de fibres optiques (2, 4) au moyen de porteurs optiques modulés,
caractérisé en ce que la station de base est adaptée pour commander le transfert des appels entre les ports radio par l'intermédiaire des commutations sélectives d'émetteurs-récepteurs radio (15) à partir d'un port radio (1) vers un autre port radio (1) par le commutateur à matrice.

2. Un système de commutation selon la revendication 1 dans lequel une diversité de fonctionnement est assurée par commutation entre deux ports radio ou plus dans la commutation matricielle.

3. Un système de communication comprenant :
un centre de base (10) équipé d'un ou d'une pluralité d'émetteurs-récepteurs radio (15) pour établir une pluralité de liaisons de communications à fréquence radioélectrique (RF) chaque liaison de communication étant sur une fréquence radio séparée ;
une pluralité de ports radio fixes (1) au travers desquels les signaux RF peuvent être transmis et reçus par air ;
un réseau à fibres optiques (2, 4) pour interconnecter les émetteurs-récepteurs RF (15) et les ports radio fixes ;
un commutateur à matrice (13) pour commuter les signaux RF pour interconnecter sélectivement les émetteurs-récepteurs (15) et les ports radio (1) par l'intermédiaire du réseau de fibres optiques (2, 4), le commutateur à matrice étant arrangé pour multiplexer sélectivement des nombres de signaux RF dans un multiplex à répartition en fréquence devant être porté sur un des porteurs optiques,
une pluralité d'interfaces radiooptiques (11) grâce auxquelles les signaux RF peuvent être modulés et démodulés à partir d'un ou d'une pluralité de porteurs optiques, lesdites interfaces (11) étant entre le commutateur à matrice (13) et le réseau de fibres optiques (2, 4), et entre le réseau de fibres optiques (2, 4) et les ports radio fixes de manière que les signaux RF puissent être acheminés sur le réseau de fibres optiques (2, 4) au moyen de porteurs optiques modulés,
caractérisé en ce que une opération de diversité de fonctionnement est assurée par commutation entre deux ports radio ou plus dans la commutation matricielle.

4. Un système de communication selon la revendication 1, 2, ou 3 dans lequel il y a un multiplexage/démultiplexage des signaux optiques dans le réseau à fibres optiques.

5. Un système de communication selon les revendications 1, 2, 3 ou 4 dans lequel le réseau de fibres optiques (2, 4) comprend l'acheminement sur la longueur d'onde des signaux optiques.
